# EUROPEAN PATENT APPLICATION

(11) **EP 2 081 076 A2**
(43) Date of publication of application: **22.07.2009**
(21) Application number: 09150850.7
(22) Date of filing: 19.01.2009
(51) Int. Cl.: G02F 1/13

(54) **Liquid crystal display panel**

(30) Priority: 21.01.2008 JP 2008010059
(71) Applicant: Orion Electric Co., Ltd, Echizen-shi, Fukui 915-8555 (JP)
(72) Inventor: Watanabe, Kazuhiro c/o Orion Electric Co., Ltd., Echizen-shi, Fukui 915-8555 (JP)
(74) Representative: Vossius & Partner

(57) **Abstract**

To prevent leak of light to outside from a light emitting part, in a liquid crystal display panel (15) including, as main parts, a light emitting part (7), an outer shape part constituted with a back face member (5) arranged along with a reflecting member (6) and a side face member (8), an optical sheet, a liquid crystal cell (12) of displaying an image, a drive circuit board (34) for displaying an image by driving the liquid crystal cell is connected to the liquid crystal cell (12) by way of a flexible printed wiring plate (35), the back face member (5) is integrally formed with mounting portions (40a, 40b) for mounting to fix the drive circuit board (34) by drawing, a side end of a back plate (18) of the back face member (5) is provided with protecting pieces (41), and both end portions of an outer wall of the side face member (8) are provided with extended portions (60) projected from an inner wall (Fig. 1).

## Description

The present invention relates to a liquid crystal display panel carrying an image display portion of a liquid crystal display apparatus, further in details, relates to a structure of preventing leakage of light of a liquid crystal display panel.

A liquid crystal display apparatus is constituted by assembling various kinds of boards, a speaker, and a liquid crystal display panel or the like to an inner portion of a display portion constituted by a rear side cabinet and a front side cabinet. Further, the liquid crystal display panel is constituted by a structure of successively attaching an outer shape part of covering upper and lower, left and right, and back faces of a light emitting part, an optical sheet of diffusing/converging light irradiated by the light emitting part, and a liquid crystal cell of displaying an image to a front face side of the light emitting part. Further, as the light emitting part, one constituted by arranging a light-emitting member substantially in a linear shape, or a plurality of LEDs is used to constitute a structure of holding a vicinity of an end portion of the light emitting part by the outer shape part.

The optical sheet and the liquid crystal cell are attached to the outer shape part by using holding members of respectively holding vicinities of edge portions thereof and means for supplying a power source is constituted by being connected to the light emitting part and a circuit board attached to an inner portion of a cabinet of the liquid crystal display apparatus by way of a wire member. Further, the liquid crystal cell is connected to a drive circuit board separately by way of a flexible wiring plate, and the drive circuit board is fixed to the liquid crystal display panel and connected to a control circuit board separately attached to the liquid crystal display apparatus. Further, there is also a liquid crystal display apparatus in which a circuit of supplying a power source and a control circuit are constituted by the same board.

Describing a structure of a holding member mentioned above in details, there is "method of fabricating display apparatus and face-like member" according to JP-A-2006-317865. According to the structure, although a liquid crystal cell can be prevented from being destructed by constituting a front face side holding member (holding member) of holding the liquid crystal cell by a frame member in a quadrangular shape, the front face side holding member constituted by the frame member in the quadrangular shape is constituted by punching and forming a flat plate, and therefore, a material of a center portion is wasted, and therefore, high cost is caused.

Further, according to "liquid crystal module" of JP-A-2005-350218, a loss of a material in fabricating is restrained by dividing a bezel (holding member) in a shape of a rectangular frame into two members, and the bezel is constituted by forming the two members into a rectangular frame shape by carrying out an operation of fastening two members into the frame by a screw. Hence, there are provided a liquid crystal panel (liquid crystal cell), a bezel in a shape of a rectangular frame (holding member for liquid crystal cell), a frame, a linear light source (light emitting part) for a backlight, a reflecting member, and a rear plate. The bezel is divided into two members in an L-like shape, and respective divided ends of the respective members are provided with projected pieces of forming screw fastening pieces by being overlapped by each other. The two members are attached into the frame in the rectangular shape by fastening the screw fastening pieces to the frame by setscrews to form the bezel in the shape of the rectangular frame. That is, despite an L type mode of dividing the frame-like bezel in two, a molding die is complicated and large-sized, and when a size thereof is increased, the bezel is frequently deformed by being bent in transportation or in assembling.

Further, according to "frame structure used in back light module" of JP-A-2006-285161, a middle holding member (holding member for optical sheet) constituting the structure is made by a frame member in a quadrangular shape, an edge of an optical sheet mounted on a back face member is held, and a liquid crystal cell is held by a front side holding member (holding member for liquid crystal cell) by mounting a surrounding edge of the liquid crystal cell on the middle holding member. Therefore, cost is increased and molding die is enlarged similar to the above-described structure.

In this way, although there are various structures constituting the liquid crystal display panel of the prior art in consideration of fabrication cost, availability of assembly, a basic structure is constituted by a structure of arranging the light emitting part on the back side of the liquid crystal cell, irradiating light emitted from the light emitting part to the liquid crystal cell and preventing the light from being leaked to outside.

A problem to be resolved by the invention is to provide a liquid crystal display panel of which fabrication is simple at low cost and constituted by a structure of preventing light of the light emitting part from being leaked to outside.

A liquid crystal display panel according to the invention is constituted by arranging a back face member on a rear side of a light emitting part, and arranging side face members on both sides of the light emitting part, thus constituting an outer shape part by the back face member and the side face member, arranging the light emitting part on an inner face side of the outer shape part, and assembling at least an optical sheet and a liquid crystal cell of displaying an image on a front face side of the light emitting part. The back face member is formed substantially in a trapezoidal shape in a sectional view thereof extending edge portions of two sides different from a side of attaching the side face member, and the side face member is formed in a shape matching with the sectional shape of the back face member.

Meanwhile, the liquid crystal display panel according to the invention is constituted by a structure of preventing light emitted from an optical part at inside thereof from being leaked to outside and is characterized as follows.
(1) A structure of attaching a drive circuit board for displaying an image by driving a liquid crystal cell.
   A mounting portion is integrally formed by rising a portion of the back face member through a drawing processing and a drive circuit board is mounted at the mounting portion. Further, a projected portion for positioning the drive circuit board is provided at a mounting face of the mounting portion, the projected portion is fitted to a hole formed at the drive circuit board and the drive circuit board is screwed to fasten.
(2) Light blocking ribs (extended portions) are extended at both end portions of an outer wall of the side face member, and an edge of a side plate of the back face member is brought into contact with the extended portion.
(3) An inner edge of a corner portion of the side face member (inner side of mounting portion) is disposed on an outer side of an inner side of a lower edge of the back face member.
(4) Both ends of the light emitting part are attached with elastic damping members, an interval between the inner wall and the outer wall of the side face member is provided with an attaching portion of fitting the elastic damping member, further, the outer wall is formed with a recess groove capable of projecting the elastic damping member, and the elastic damping member is fitted to the attaching portion in a movable state.
   Or, there is a case in which the interval between the inner wall and the outer wall is formed with the attaching portion having a width larger than a width of the elastic damping member, and the elastic damping member is loosely fitted to the attaching portion to be attached thereto movably.
(5) Both left and right ends of the back plate of the back face member include protecting pieces bent orthogonally to the back plate, and the protecting pieces close recess grooves fitted with the elastic damping members of holding both ends of the light emitting part.
(6) Further, a projected piece is projected from the elastic damping member, and the projected piece is loosely fitted to a groove provided at a partitioning rib of the side face member. Further, a portion of the elastic damping member is compressed by attaching the side face member to the back face member.
(7) A positioning projection is projected from the side face member, and the positioning projection is fitted to a positioning hole provided at the back face member. Further, the U-like shape light emitting part is surrounded by the partitioning rib, and the positioning projection is provided between the partitioning ribs of the U-like shape light emitting part contiguous to each other.

The liquid crystal display panel is constituted a structure assembled with a number of parts and is devised such that light is not leaked from a gap produced between the respective parts to outside, and has effects as follows.
(1) According to the invention, the mounting portion is integrally formed by rising a portion of the back face member through a drawing processing, the drive circuit board is mounted on the mounting portion, and the projected portion for positioning the drive circuit board is provided at the mounting face of the mounting portion, the projected portion is fitted to the hole formed at the drive circuit board and the drive circuit board is screwed to fasten. In this way, by drawing the mounting portion, light of the light emitting part is not leaked from the mounting portion, further, the mounting portion is provided with a constant height, and therefore, it is not necessary to paste an insulating sheet between the mounted drive circuit board and the back face member.
(2) The both end portions of the outer wall of the side face member are provided with the extended portions and by bringing the extended portions into contact with edges of the side plates of the back face member, light is not leaked from between the edge of the side plate and the outer wall.
(3) By making the inner side of the mounting portion of the side face member disposed on the outer side (lower side) of the inner side of the lower edge of the back face member, unevenness of brightness at a screen corner is resolved. That is, although the back face member is made of an iron plate, and therefore, even when light is cast thereto, light is not reflected, the side face member is constituted by molding a resin of a white color, and therefore, when light is cast thereto, light is reflected to be easy to be optically recognized and light is viewed as a unevenness because there is a reflecting face at the vicinity of the edge of the screen.
   However, according to the invention, the inner side of the mounting portion of the side face member is backed to the outer side from the inner side of the lower edge of the back face member, and therefore, the unevenness by reflecting light can be restrained from appearing at the screen corner.
(4) The both ends of the light emitting part are attached with the elastic damping members, the interval between the inner wall and the outer wall of the side face member is provided with the attaching portion of fitting the elastic damping member, further, the outer wall is formed with the recess groove capable of projecting the elastic damping member, and the elastic damping member is fitted to the attaching portion in the movable state. Therefore, even when a position of soldiering a wire connected to the light emitting part is dispersed, and even when dimensions of the light emitting part and the elastic damping member are dispersed, a degree of freedom in a longitudinal direction is ensured by forming the recess groove penetrating the outer wall, and the slender light emitting part is not bent.
   On the other hand, the light emitting part is prevented from being bent similarly in case the attaching portion having the width larger than the width of the elastic damping member is formed between the inner wall and the outer wall and the elastic damping member is loosely fitted to be attached to the attaching portion.
(5) The both left and right ends of the back face member are provided with the protecting pieces bent orthogonally to the back plate, and the protecting pieces close the recess grooves fitted with the elastic damping members of holding the both ends of the light emitting part. Therefore, the protecting piece can cut noise from the portion of soldering the light emitting part and the wire and block light leaked from the gap of the plastic damping member and the recess groove to outside.
(6) Further, the projected piece is projected from the elastic damping member and the projected piece is loosely fitted to the groove provided at the side face member. Further, a portion of the elastic damping member is compressed by attaching the side face member to the back face member. Therefore, the slender light emitting part is not bent and is not vibrated by resonating with speaker sound and is stably attached.
(7) The positioning projection is projected from the side face member, and the positioning projection is fitted to the positioning hole provided at the back face member. Here, the U-like shape light emitting part is surrounded by the partitioning rib, the positioning projection is provided between the partitioning ribs of the U-like shape light emitting parts contiguous to each other, thereby, light emitted by the U-like portion cannot be leaked from the positioning hole of the back face member fitted with the positioning projection.
   Fig.1 is a perspective view of a liquid crystal display apparatus using a liquid crystal display panel according to an embodiment of the invention;
   Fig.2 is a disassembled perspective view of the liquid crystal display panel according to the embodiment of the invention;
   Figs.3A, 3B and 3C are views of steps of attaching a right bezel constituting the liquid crystal display panel;
   Fig.4 is a perspective view showing a state of erecting the liquid crystal display panel with tacking left and right bezels from a rear side;
   Fig.5A is a perspective view showing a state before attaching the upper and lower bezels, and Fig.5B is a partially enlarged perspective view showing a state before fastening the lower bezel by a screw;
   Fig.6 is a perspective view showing an outlook of the liquid crystal display panel attached with the upper and lower bezels;
   Fig.7 is a perspective view showing a state of attaching a diffusion plate and a diffusion sheet;
   Fig.8 is a perspective view showing a state of attaching a middle holding member;
   Fig.9 is a perspective view showing a state of attaching a liquid crystal cell;
   Fig.10 is a perspective view showing a state of overlapping an end part of the middle holding member on an upper face of a side face member;
   Fig.11A is a partially enlarged perspective view of a hook formed at a middle holding member of a background art and an attaching face of a back face member, and Fig.11B is a partially enlarged perspective view showing a light blocking wall formed on a rear side of the middle holding member according to the embodiment;
   Fig.12A is a partially enlarged sectional perspective view showing a state of attaching the middle holding member according to the embodiment, and 12B is a partially enlarged perspective view of a rear side showing a state of attaching the middle holding member and an optical sheet;
   Fig.13 is a perspective view showing a back face member from a rear side;
   Fig.14A is a perspective view showing a reflecting member, and Fig.14B is a perspective view showing a back face member;
   Fig. 15 is a perspective view showing the side face member;
   Fig. 16 is a perspective view of a rear side showing a state of attaching a plurality of pieces of light emitting parts to both side face members;
   Fig.17 is a partially enlarged perspective view showing a structure of attaching a light emitting part to the side face member from one direction;
   Fig.18 is a partially enlarged perspective view showing the structure of attaching the light emitting part to the side face member from other direction;
   Fig.19 is a perspective view showing the side face member on a power source supply side connected to the light emitting part by way of a connector;
   Fig.20 is a perspective view showing a state of attaching the light emitting part to the side face member on the power source supply side by way of an elastic damping member;
   Fig.21 is a partially enlarged perspective view showing a rear side portion of the liquid crystal display panel;
   Fig.22 is a partially enlarged perspective view showing a structure of attaching a U-like shape light emitting part to the side face member;
   Fig.23 is a partially enlarged perspective view showing the rear side portion of the liquid crystal display panel;
   Fig.24 is a partially enlarged perspective view showing a mounting portion provided at an upper side plate of the side face member;
   Fig.25 is a partially enlarged perspective view showing the rear side of the liquid crystal display panel attached with a drive circuit board; and
   Fig.26 is a partially enlarged perspective view showing a corner portion of the liquid crystal display panel.

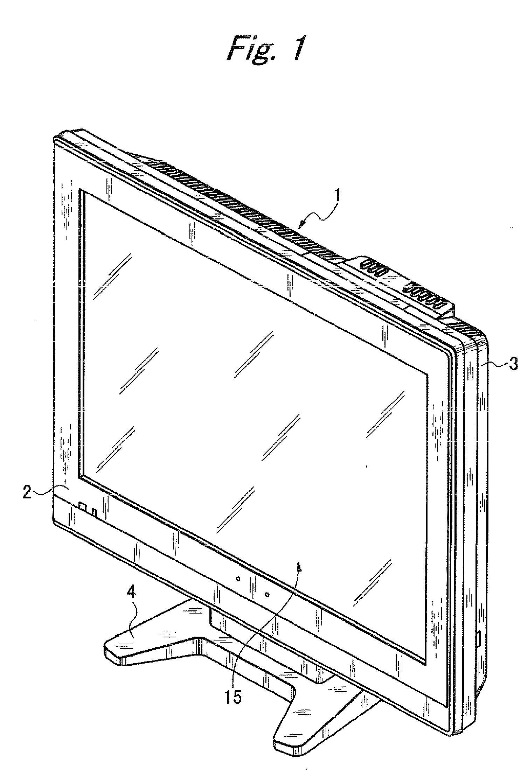

An embodiment as the best mode for carrying out the invention will be explained as follows in reference to Figs.1 through 26. Naturally, needless to explain that the invention is easily applicable also to a constitution other than explained in the embodiment within a range not contrary to the gist of the invention.

Fig.1 shows a front side perspective view of a liquid crystal display apparatus according to the embodiment. The liquid crystal display apparatus is erected by including a stand 4 and a display portion 1 is constituted by a front side cabinet 2, a rear side cabinet 3, a liquid crystal display panel 15, and other part. Although there are various specific structures of the display portion 1, according to the embodiment, there is constituted a structure of assembling various kinds of inner constitution parts including the liquid crystal display panel 15 to the rear side cabinet 3 and finally attaching the front side cabinet 2. Conversely, even a structure of assembling various kinds of inner constitution parts including the liquid crystal display panel 15 to the front side cabinet 2 and finally attaching the rear side cabinet 3 is not contrary to the gist of the invention.

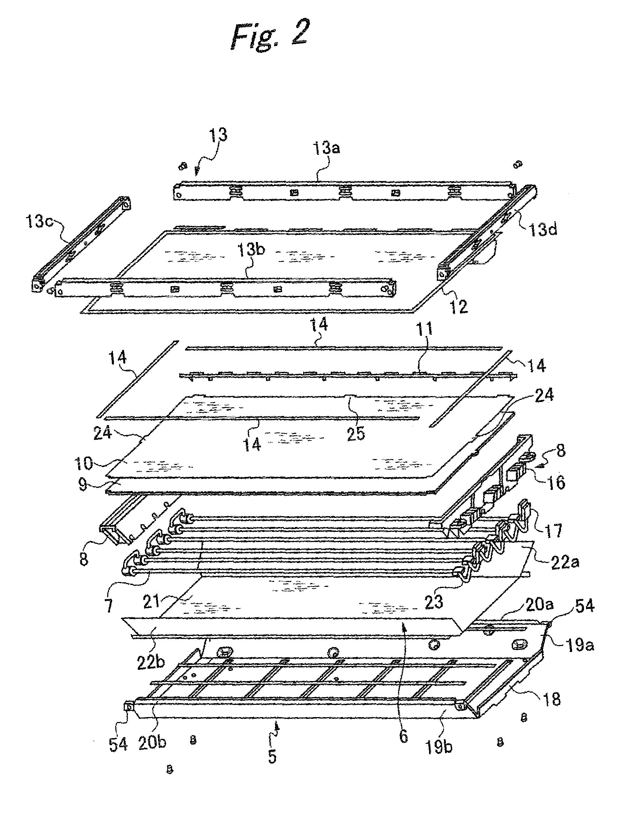

Fig.2 is a disassembled perspective view of the liquid crystal display panel 15 according to the invention constituting the display portion 1, numeral 5 of the drawing designates a back face member, numeral 6 designates a reflecting member arranged on an inner face side of the back face member 5, numeral 7 designates a light emitting part, numeral 8 designates a side face member, numeral 9 designates a diffusion plate as a constituting member of an optical sheet, numeral 10 designates a diffusion sheet as a constituting member similarly of the optical sheet, numeral 11 designates a middle holding member, numeral 12 designates a liquid crystal cell, numeral 13 designates a front face side holding member, and numeral 14 designates a rubber member attached to faces of the back face member 5, the side face member 8, and the middle holding member 11 of mounting the liquid crystal cell 12, respectively. Further, although according to the embodiment shown in the drawing, the optical sheet is constituted with the diffusion plate 9 and the diffusion sheet 10, the constitution of the optical sheet is not limited to a constitution of two parts of the diffusion plate 9 having a function of diffusing light and the diffusion sheet 10 having functions of diffusing light and converging light. Although the optical sheet is constituted with the above-described 2 sheets (diffusion plate 9, and diffusion sheet 10), there is also a case of constituting the optical sheet with 1 sheet, and conversely, a case of constituting the optical sheet with 3 sheets or more thereof.

According to the liquid crystal display apparatus, inner constitution parts of various kinds of boards, a speaker or the like are successively attached to the rear side cabinet 3, and finally, the liquid crystal display panel 15 constituted by assembling the respective parts shown in Fig.2 is mounted. Therefore, in processing a connector attached with a wire member extended from a power source supplying circuit board (not illustrated) attached to the rear side cabinet 3, the side face member 8 is utilized, a connector 17 on a side of the light emitting part 7 is fitted to be attached to a connector holding portion 16 provided at the side face member 8, and the connector attached with the wire member from the power source supplying circuit board is connected to the connector 17 to thereby promote an operability of assembly.

That is, although when the liquid crystal display panel 15 is installed to the rear side cabinet 3, it is not easy to lead out the connector attached with wire member extended from the power source supplying circuit board to be processed to connect to the light emitting part 7, according to the invention, by attaching the connector 17 to the side face member 8, an operation of connecting the power source supplying circuit board can be facilitated.

The back face member 5 includes an upper side plate 19a and a lower side plate 19b on both sides (upper and lower sides) of a back plate 18 and the upper and lower side plates 19a and 19b are incline in directions of opening front end sides thereof. That is, substantially a trapezoidal shape is constituted in a sectional view thereof. Further, an edge 20b of the lower side plate 19b is constituted by substantially a channel-like shape in a section thereof and lower ends of the diffusion plate 9 and the diffusion sheet 10 are fitted thereto to be attached to stop thereby. An edge 20a of the upper side plate 19a on one side is constituted by a flat receiving face and mounted with upper ends of the diffusion plate 9 and the diffusion sheet 10.

The reflecting member 6 is provided with a similar section one size smaller than the back face member 5 by being constituted by a thin sheet, and includes an upper side plate 22a and a lower side plate 22b on both sides of a back plate 21. Therefore, the back plate 21 overlaps the back plate 18, the upper side plate 22a overlaps the upper side plate 19a, and the lower side plate 22b overlaps the lower side plate 19b to laminate. Further, the side face members 8, 8 substantially in a trapezoidal shape are installed at openings of both ends of the reflecting member 6, the side face members 8, 8 are attached with a plurality of pieces of the light emitting parts 7, 7·· constituted by slender fluorescent tubes, and the connectors 17, 17·· connected with wire members 28, 23·· extended from one end sides of the light emitting parts 7, 7·· are fitted to be attached by the connector holding portions 16, 16·· formed at the side face member 8. Further, although the reflecting member 6 is used for increasing a brightness of light irradiated from the light emitting parts 7, 7··, the reflecting member 6 can also be saved by forming the back face member 5 by a color capable of increasing the brightness, or directly coating an inner face side of the back face member 5 by color easy to be reflected.

The diffusion plate 9 and the diffusion sheet 10 are overlapped to be mounted, the lower ends of the diffusion plate 9 and the diffusion sheet 10 are inserted to the edge 20b of the section substantially in the channel-like shape of the lower side plate 19b of the back face member 5 as described, and the upper edges are mounted on the flat receiving portion of the edge 20a of the upper side plate 19a. Further, both side ends of the diffusion plate 9 and the diffusion sheet 10 are mounted on upper faces of the side face members 8, 8, projections 24, 24 are formed to project at side ends of the diffusion plate 9 and the diffusion sheet 10, and the projections 24, 24 are fitted to recess grooves provided at the side face members 8, 8 to be attached to stop thereby.

Further, projections 25, 25·· formed at upper ends of the diffusion plate 9 and the diffusion sheet 10 are fitted to grooves provided at the edge 20a of the upper side plate 19a to be attached to stop thereby. In this way, the middle holding member 11 is attached to upper end portions of the diffusion plate 9 and the diffusion sheet 10 mounted on the edges 20a, 20b of the back face member 5 and the upper faces of the side face members 8, 8, and the slender rubber members 14, 14·· are provided to the side face members 8, 8, the edge 20b of the lower side plate 19b and the middle holding member 11. Further, the liquid crystal cell 12 is laminated thereon and the front face side holding member 13 is attached thereto.

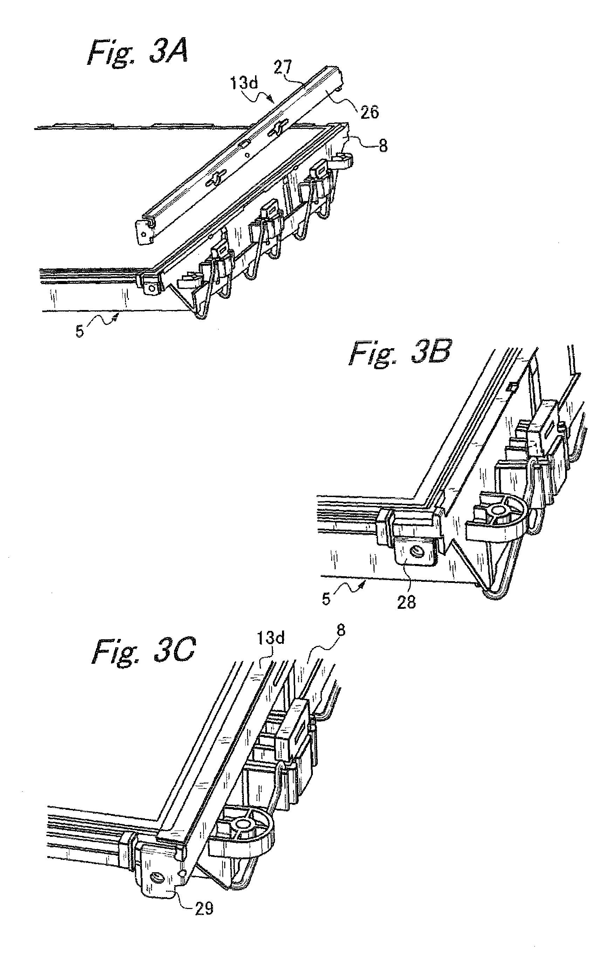

The front face side holding member 13 is constituted by 4 pieces of holding members of an upper holding member 13a, a lower holding member 13b, a left holding member 13c, and a right holding member 13d, the upper and the lower holding members 13a, 13b are constituted by a common shape, and also the left and the right holding members 13c, 13d are constituted by a common shape. Further, as shown by Figs.3A, 3B, and 3C, the left and the right holding members 13c, 13d can be mounted to tack to the side face members 8, 8 and the liquid crystal cell 12 is tackedly fixed to the outer shape part so as not to be detached therefrom by the tacking.

That is, the left and the right holding members 13c, 13d constitute sections in an L shape, and include longitudinal pieces 26 and upper pieces 27, and both side ends of the liquid crystal cell 12 are held by the upper pieces 27 by tacking the longitudinal pieces 26 to the side face members 8. Fig.3A shows a state of tacking the right holding member 13d to the side face member 8, Fig.3B shows screw fastening portions 28 provided at both ends of the back face member 5, and Fig.3C shows a front end portion in a state of tackedly attaching the right holding member 13d to the side face member 8. As shown by the drawing, a front end of the right holding member 13d is provided with a fixing portion 29 and the fixing portion 29 is fastened by a screw by matching with the screw fastening portion 28 of the back face member 5. However, screw fastening is not carried out by the right holding member 13d by itself but screw fastening is carried out along with the lower holding member 13b.

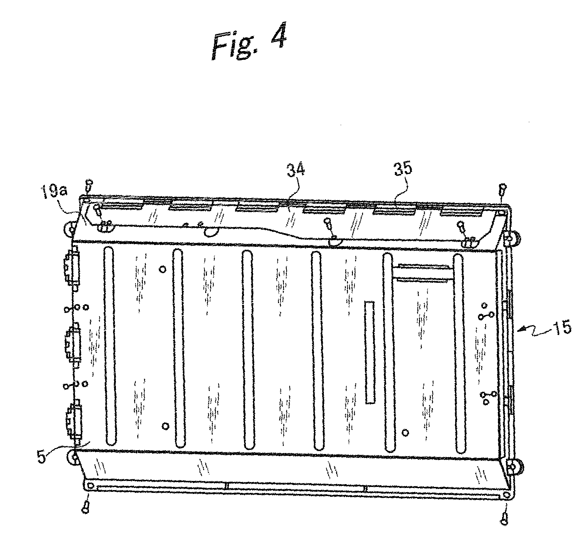

Fig.4 shows a back face of the liquid crystal display panel 15, and the liquid crystal cell 12 is connected with a drive circuit board 34. The drive circuit board 34 is fastened to the upper side plate 19a of the back face member 5 by screw, and even when the liquid crystal display panel 15 is erected or reversed in the screw fastening operation, the liquid crystal cell 12 is not detached to drop by being tacked to the left and right holding members 13c, 13d. Further, although the drive circuit board 34 is connected to the liquid crystal cell 12 by flexible printed wiring plates 35, 35··, in a state of attaching the upper holding member 13a, the flexible printed wiring plate 35 is restricted and it is difficult to fasten the drive circuit board 34 by a screw at a predetermined position. Therefore, the drive circuit board 34 is fastened by a screw to a back face of the upper side plate 19a of the back face member 5 in a state of previously tacking the liquid crystal cell 12 so as not to be detached to drop only by the left and right holding members 13c, 13d.

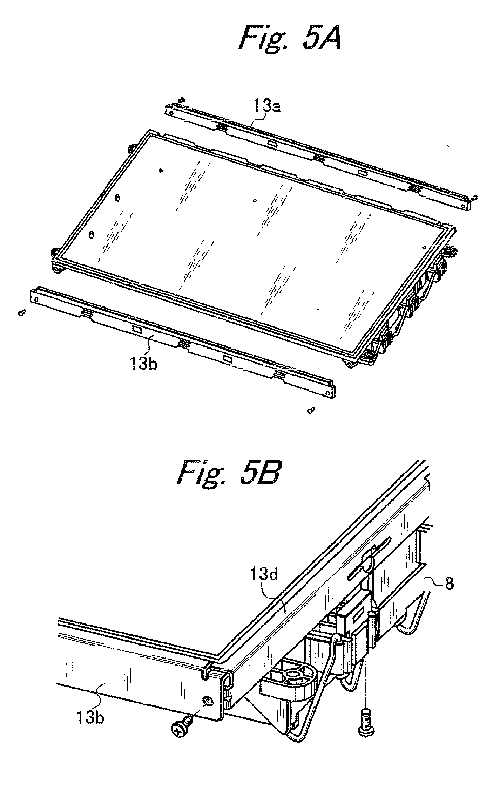

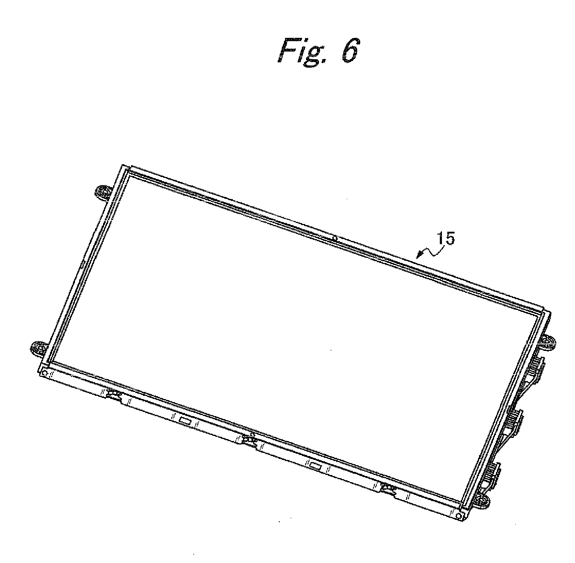

Figs.5A and 5B show cases of respectively attaching the upper holding member 13a and the lower holding member 13b on upper and lower sides of the liquid crystal display panel 15, and the screw fastening is carried out by attaching the upper holding member 13a and the lower holding member 13b. Fig.5B shows a case of fastening the lower holding member 13b by a screw, and the lower holding member 13b can be fastened by a screw to the screw fastening portion 28 of the back face member 5 along with the right holding member 13d by passing the screw through a hole provided at a front end thereof. That is, the left and right holding members 13c, 13d brought into the tacked state are fastened by screws to the back face member 5 along with the upper and lower holding members 13a, 13b. Further, the liquid crystal display panel 15 attached with the left and right holding members 13c, 13d and the upper and lower holding members 13a, 13b becomes as shown by Fig.6.

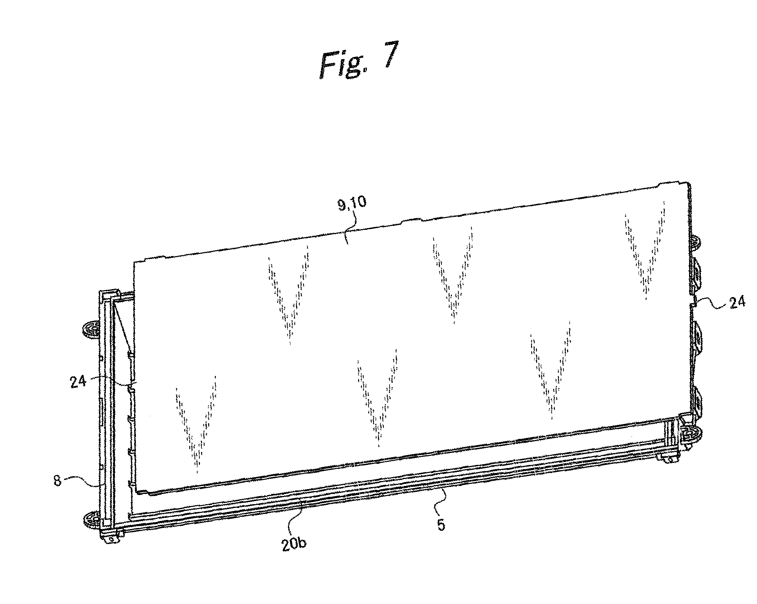

Meanwhile, Fig.7 shows a case of mounting the diffusion plate 9 and the diffusion sheet 10 overlapped by each other, lower ends thereof are fitted to the edge 20b having the section substantially in the channel-like shape formed at the lower side plate 19b of the back face member 5, and projections 24, 24 provided at both side ends are fitted to recess grooves formed at the side face members 8, 8 to be positioned thereby. Further, upper ends thereof are mounted on a flat receiving portion provided at the edge 20a of the upper side plate 19a.

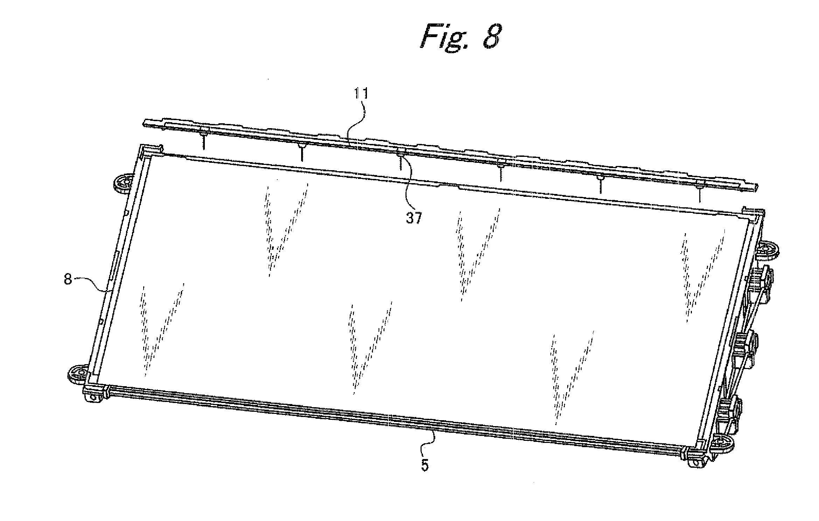

Fig.8 shows a case of attaching the middle holding member 11 after mounting the diffusion plate 9 and the diffusion sheet 10, and the middle holding member 11 is attached to the upper end portions of the diffusion plate 9 and the diffusion sheet 10. The middle holding member 11 is formed with a plurality of hooks 37, 37·· and the hooks 37, 37·· are attached by being fitted to be locked by a groove formed at the edge 20a of the upper side plate 19a of the back face member 5. Therefore, the upper ends of the diffusion plate 9 and the diffusion sheet 10 are held by the middle holding member 11 along with the upper side plate edge 20a of the back face member 5.

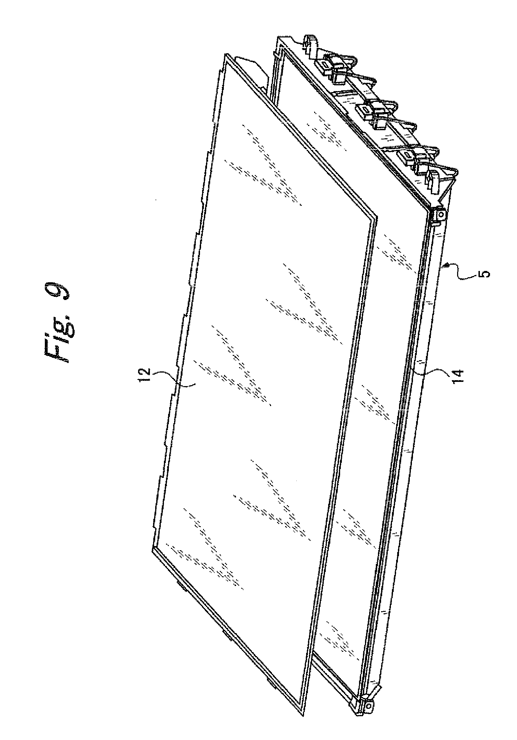

Fig.9 shows a case of attaching the liquid crystal cell 12, the rubber members 14, 14·· are respectively pasted on the side face members 8, 8, and the edge 20b having the section substantially in the channel-like shape of the lower side plate 19b of the back face member 5, and an upper face of the middle holding member 11, and the liquid crystal cell 12 is mounted under the state.

Meanwhile, the middle holding member 11 holds upper ends of the diffusion plate 9 and the diffusion sheet 10 mounted on the upper side plate edge 20a of the back face member 5 and is formed to extend end portions thereof to overlap the upper face of the side face member 8 to attach. Although the side face member 8 is molded by a resin of white color in order to reflect light, the middle holding member 11 is constituted by black color in order to prevent leakage of light.

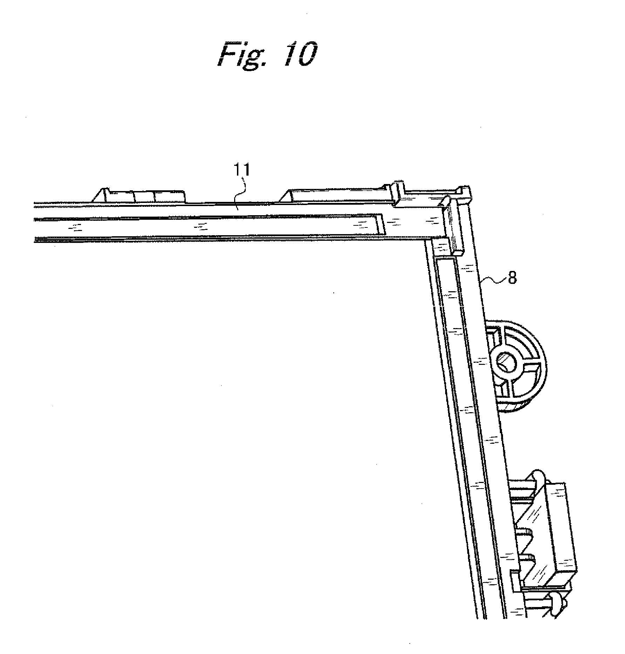

When both end portions of the middle holding member 11 are brought into a state of being butted to the inner side faces of the side face members 8, light is leaked from a gap between the middle holding member 11 and the side face member 8, or a unevenness of color is produced at a corner of the liquid crystal cell 12. Particularly, in a case of a white screen display, an unevenness constituting a black shadow is brought about in an optically recognized range of the liquid crystal cell 12 to constitute a factor of considerably deteriorating a grade. In order to prevent this, the both end portions of the middle holding member 11 are extended to be brought into a state of overlapping the upper face of the side face member 8. Fig.10 shows a structure of forming a recess portion at an upper face of an end portion of the side face member 8 and fitting the end portion of the middle holding member 11 to overlap the recess portion. By the above-described structure, the gap between parts in the optically recognized range is eliminated, and light leakage or color unevenness can be prevented.

The diffusion sheet 10 and the diffusion plate 9 are attached by locking the hooks 37, 37·· of the middle holding member 11 to groove holes provided at the edge 20a of the upper side plate 19a of the back face member 5 mounted with the diffusion sheet 10 and the diffusion plate 9 laminated on a lower side thereof. However, in a state of locking the hook 37 of the middle holding member 11 to the groove hole of the back face member 5, a gap is produced between the hook 37 and the groove hole and light of the light emitting parts 7, 7·· is leaked from a surrounding of the groove hole.

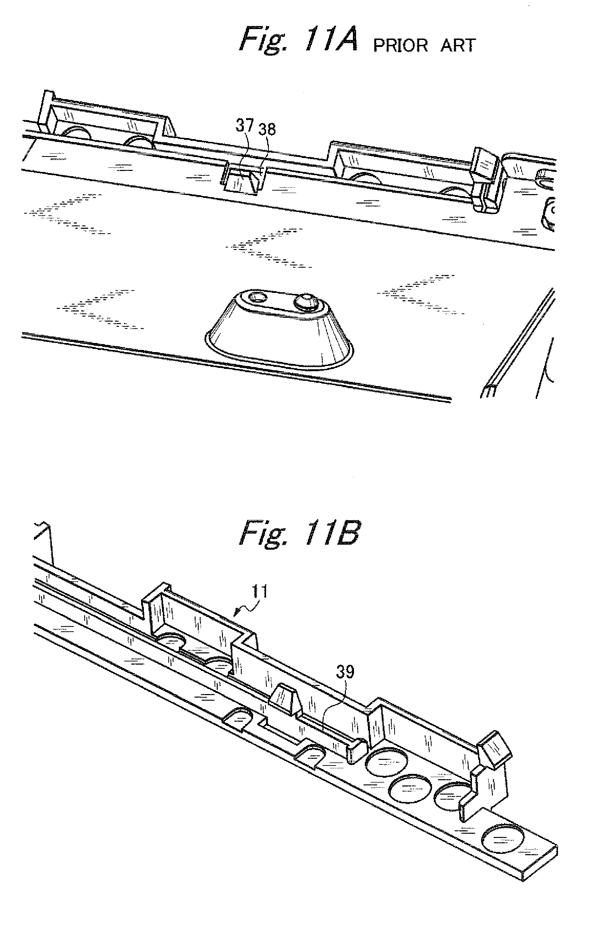

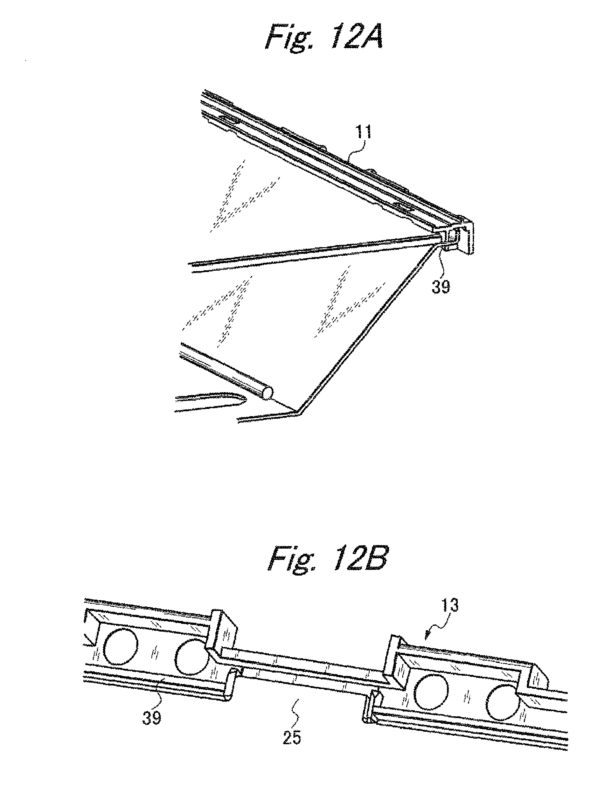

Although a relationship between the hook 37 and the groove hole in the related art is as shown by Fig.11A, according to the invention, as shown by Fig.11B, a light blocking wall 39 is formed. By the light blocking wall 39, as shown by Figs.12A, 12B, light leaked from the groove hole is blocked, and light is not leaked to a rear side of the liquid crystal display panel 15. As a result, irradiation of light to the flexible printed wiring plates 35, 35·· connected with the liquid crystal cell 12 and the drive circuit board 34 can be prevented and an electric erroneous operation can be prevented.

Next, respective parts constituting the liquid crystal display panel 15 will be explained as follows.

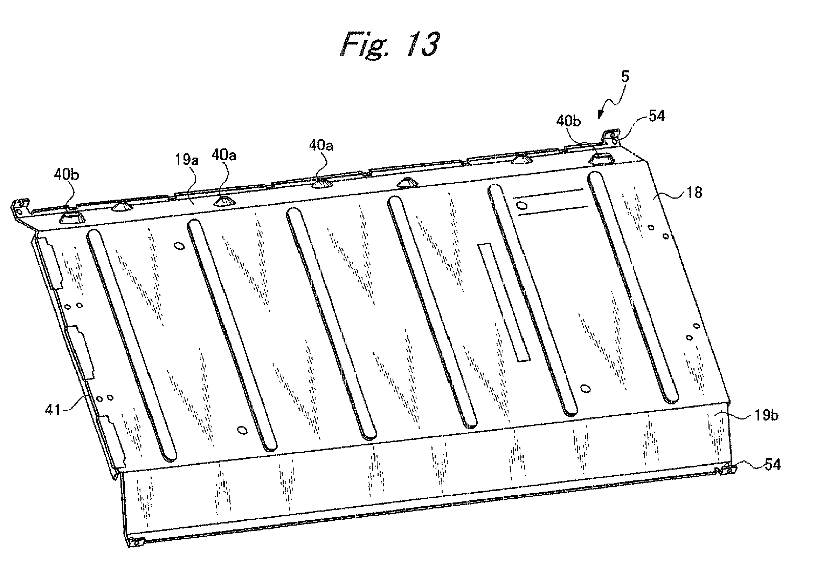

Fig.13 is a perspective view showing a rear side of the back face member 5, the back face member 5 is formed by bending an iron plate, and the back plate 18, and the upper side plate 19a and the lower side plate 19b are provided to incline on upper and lower sides thereof. Further, mounting portions 40a, 40a·· 40b, 40b are projected from the upper side plate 19a to outer sides. The mounting portions 40a, 40a·· 40b, 40b are constituted by drawing the upper side plate 19a to constitute substantially a shape of a circular cone and a height thereof is made to be equal to or larger than about 4mm. Further, both ends of the back plate 18 are provided with protecting pieces 41, 41 extended to inner sides.

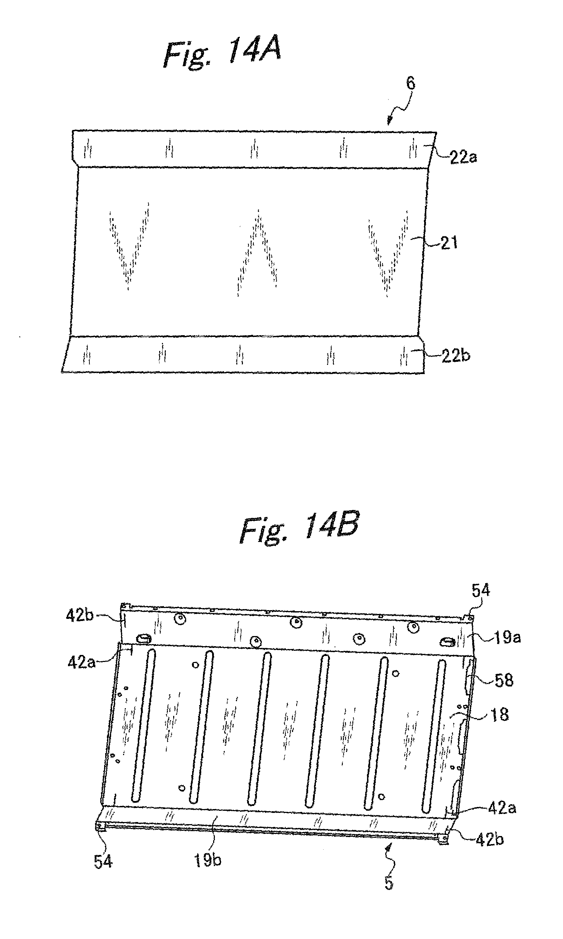

Fig.14A shows a front face side of the reflecting member 6, Fig.14B shows a front face side of the back face member 5, respectively, and the reflecting member 6 overlapping an upper side of the back face member 5 is constituted by white color to be able to reflect light. Further, an inner face of the back plate 18 of the back face member 5 is formed with positioning lines 42a, 42a·· at four corners thereof, and positioning lines 42b, 42b are also provided at a left side end of the upper side plate 19a and a right side end of the lower side plate 19b. In contrast thereto, the upper side plate 22a provided on the upper side of the rectangular shape back plate 21 of the reflecting member 6 projects a left side end and the lower side plate 22b provided at the lower side projects the right side end.

When the reflecting member 6 is overlapped to the back face member 5, the back plate 21 is matched to the positioning lines 42a, 42a·· formed at the four corners of the back plate 18, the left side end of the upper side plate 22a is matched to the positioning line 42b, and the right side end of the lower side plate 22b is matched to the positioning line 42b similarly. Therefore, when the reflecting member 6 constituted by a thin sheet is overlapped in a reverse state having a low function of reflecting light, the reflecting member 6 does not coincide with the positioning lines 42a, 42a·· 42b, 42b. Therefore, head and tail of the overlapped reflecting member 6 are not mistaken.

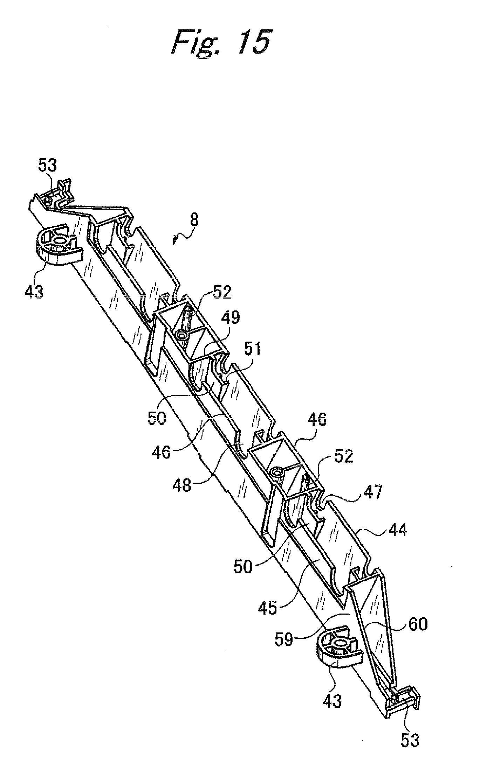

Fig.15 is a perspective view showing the side face member 8, and the side face member 8 is a molded part of a resin and is constituted by white color for reflecting light. As shown by a development view of Fig.2, the side face members 8, 8 are arranged at the side ends of the liquid crystal display panel 15, and projected portions 43, 43 projected in an outer direction are arranged at predetermined position of the rear side cabinet 3. The side face member 8 includes an inner wall 44 and an outer wall 45 by providing a space therebetween, a lower edge 46 of the inner wall 44 is formed with a plurality of recess grooves 47, 47·· and the lower edge 46 of the outer wall 45 includes recess grooves 48, 48··. Further, partitioning ribs 49, 49·· for connecting the inner wall 44 and the outer wall 45 are provided. Further, an inner side of the inner wall 44 is provided with partitions 50, 50·· at positions opposed to the recess grooves 47, 47··, and containing portions 51, 51·· are formed between the inner wall 44 and the partitions 50, 50··.

Further, positioning projections 52, 52 are projected to face the inner wall 44 and both ends thereof are provided with side face member mounting portions 53, 53. The side face member mounting portions 53, 53 are mounted by being mounted on mounting portion receives 54, 54 provided at the both ends of the upper side plate 19a and the lower side plate 19b of the back face member 5.

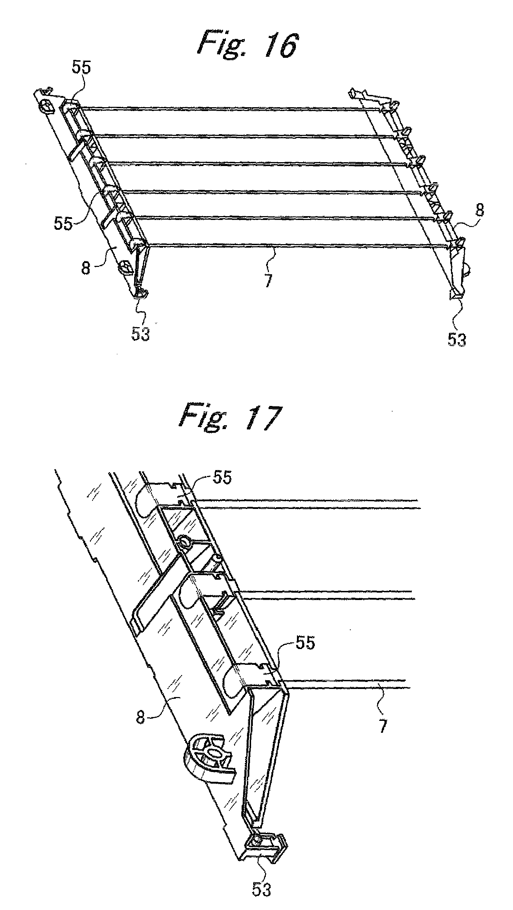

Fig.16 shows a case of attaching a plurality of pieces of the light emitting parts 7, 7·· between the two side face members 8,8, both ends of the slender light emitting parts 7, 7·· are attached with elastic damping members 55, 55·· and the light emitting parts 7, 7·· are held by the side face members 8, 8 by way of the elastic damping members 55, 55··. Under the state, the side face member mounting portions 53, 53·· are mounted on the mounting portion receives 54, 54·· of the back face member 5 by being arranged to the back face member 5 overlapped with the reflecting member 6. In this way, by providing the mounting portion receives 54, 54··, positioning arrangement of the side face member mounting portions 53, 53·· is easily carried out, and an operation of assembling the side face members 8, 8 attached with the light emitting parts 7, 7·· is facilitated.

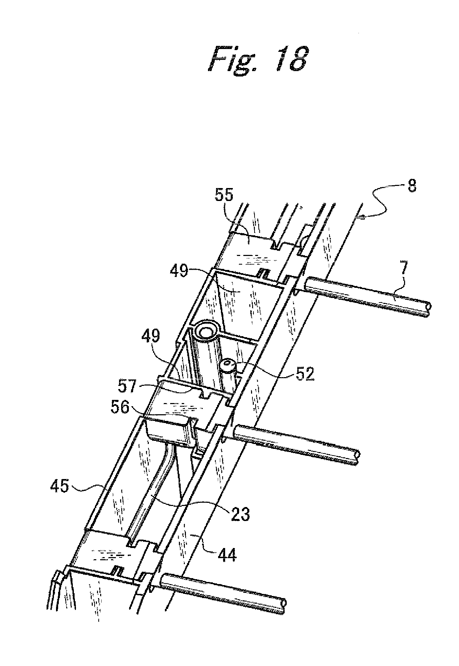

Fig.17 and Fig.18 show a case of attaching the elastic damping member 55 to the side face member 8, and the elastic damping member 55 is fitted to be attached to the recess groove 47 formed at the inner wall 44 and the recess groove 48 formed at the outer wall 45. Both sides thereof are formed with grooves 56, 56 and a projected piece 57 projected from the partitioning rib 49 is fitted to the groove 56. However, a width of the groove 56 is larger than a width of the projected piece 57, and therefore, the elastic damping member 55 is made to be able to move slightly in a longitudinal direction of the light emitting part 7.

The elastic damping members 55, 55·· attached to the both ends of the slender light emitting parts 7, 7·· are not always disposed at constant positions. That is, positions of soldering the wire members 23, 23·· connected to the light emitting parts 7, 7·· are dispersed, or dimensions of the light emitting parts 7, 7·· and the elastic damping members 55, 55·· are dispersed. Hence, by fitting the elastic damping member 55 to the recess groove 48 penetrating the outer waii 45, a degree of freedom in a longitudinal direction is ensured, as a result, the slender light emitting part 7 is not bent.

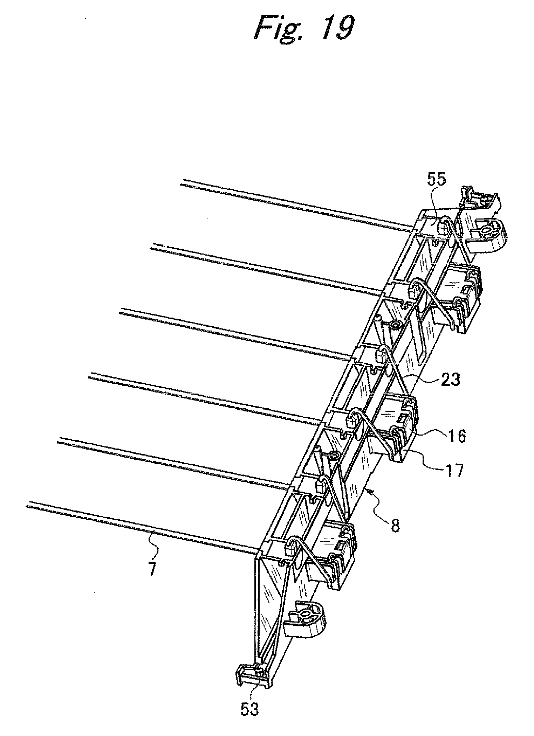

Fig.19 shows a case of showing the side face member 8 on a power source supply side, and the side face member 8 holds the light emitting parts 7, 7·· by way of the elastic damping members 55, 55··. Meanwhile, the outer side of the side face member 8 is provided with connector holding portions 16, 16··, and connectors 17, 17·· are held by the connector holding portions 16, 16··. Further, the wire members 23, 23·· extended from the respective connectors 17, 17·· are connected to the light emitting parts 7, 7··.

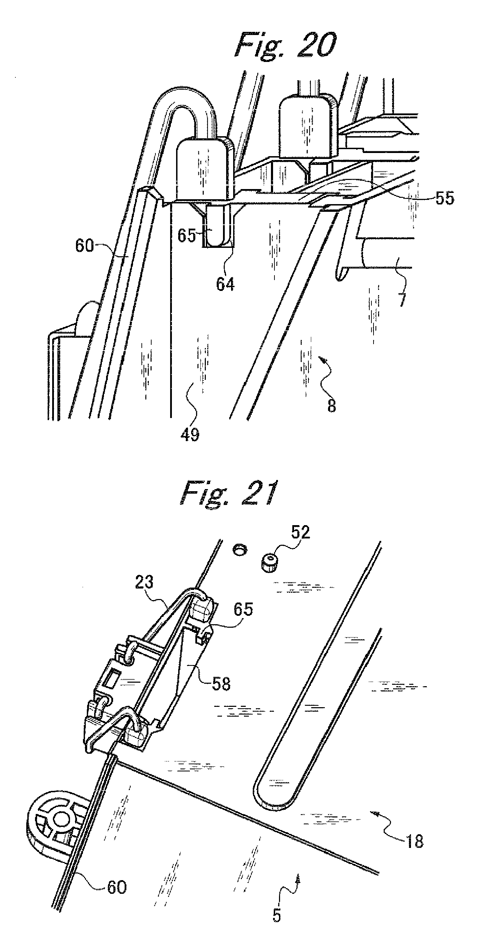

Fig.20 is a detailed view of the elastic damping member 55 attached to the side face member 8 on the power source supply side, a projected piece 65 is loosely fitted to a groove 64 provided at the partitioning rib 49, more or less gap remains therebetween, and therefore, the elastic damping member 55 can be moved in the longitudinal direction. By moving the elastic damping member 55, the slender light emitting part 7 is attached to align straight without being bent.

The light emitting parts 7, 7·· are attached to the side face members 8, 8 and arranged at the back face member 5 in a state of Fig.16 mentioned above, and Fig.21 shows portion on a rear side of the state. The back plate 18 of the back face member 5 is provided with notched holes 58, 58·· on the power source supply side by presence of the wire members 23, 23 connected to the light emitting parts 7, 7·· to press the elastic damping members 55, 55. Therefore, a resonance with sound of a speaker or the like is not brought about but pressing of the projected pieces 65, 65 is avoided.

Further, the positioning projection 52 provided at the side face member 8 is fitted to a positioning hole provided to penetrate the back plate 18. In this case, the positioning projections 52 are disposed on outer sides of the partitioning ribs 49, 49 partitioning the space arranged with the light emitting parts 7, 7 such that light is not leaked from a gap between the positioning hole and the positioning projection 52. Further, an inclined portion 59 of the outer wall 45 of the side face member 8 is provided with an extended portion 60 to be slightly higher than an inclined portion of an inner wall side. Meanwhile, front ends of the upper side plate 19a and the lower side plate 19b of the back face member 5 are brought into contact with the extended portion 60 to prevent light of the light emitting part 7 from being leaked from an inner portion. That is, light of the light emitting parts 7, 7·· is blocked by the inner wall 44, and light leaked from small gaps of the upper and lower side plates 19a, 19b is completely blocked by the extended portion 60.

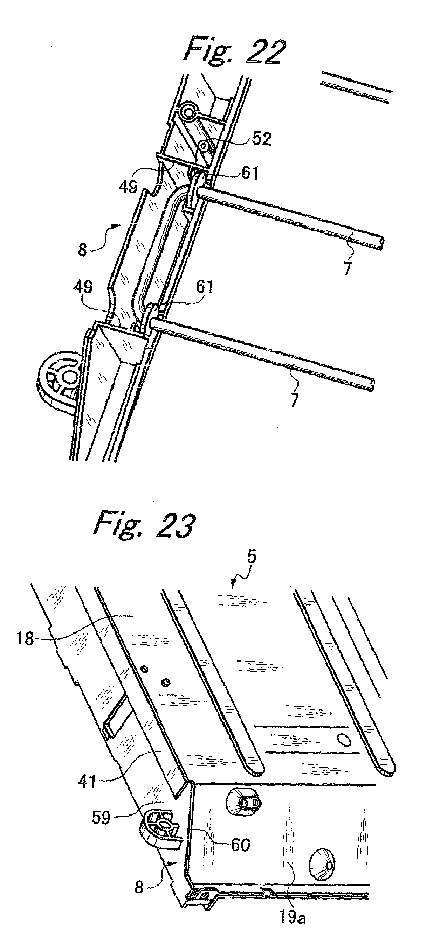

Fig.22 shows a case of attaching the light emitting part 7 in a U-like shape to the side face member 8, the light emitting part 7 in the U-like shape is attached with elastic damping members 61, 61 in a ring-like shape, and the elastic damping members 61, 61 are fitted to the containing portions 51, 51 provided at the side face member 8. Light is emitted even from a portion of the U shape light emitting part 7 contained in the side face member 8, and therefore, light is blocked so as not to be leaked from the portion by the partitioning ribs 49, 49. Therefore, light is not leaked from the gaps of the positioning projection 52 and the positioning hole.

Fig.23 shows a portion on the rear side of the liquid crystal display panel 15, the protecting piece 41 is provided at the back plate 18 of the back face member 5 to cover a portion of the side face member 8 to thereby cover the gap of the side face member 8 and the back plate 18, and the recess groove 48 fitted with the elastic damping member 55. Therefore, light of the light emitting part 7 is not leaked from the gap of the side face member 8 and the back plate 18 and the gap of the recess groove 48 and the elastic damping member 55. Meanwhile, the protecting piece 41 made of a metal also achieves an effect of shielding noise generated from the solder portion of the light emitting part 7. Further, an outer wall inclined portion 59 of the side face member 8 is provided with the extended portion 60 and slightly projected from outer surfaces of the upper side plate 19a and the lower side plate 19b, thereby, light is not leaked from a gap of the portion to outside.

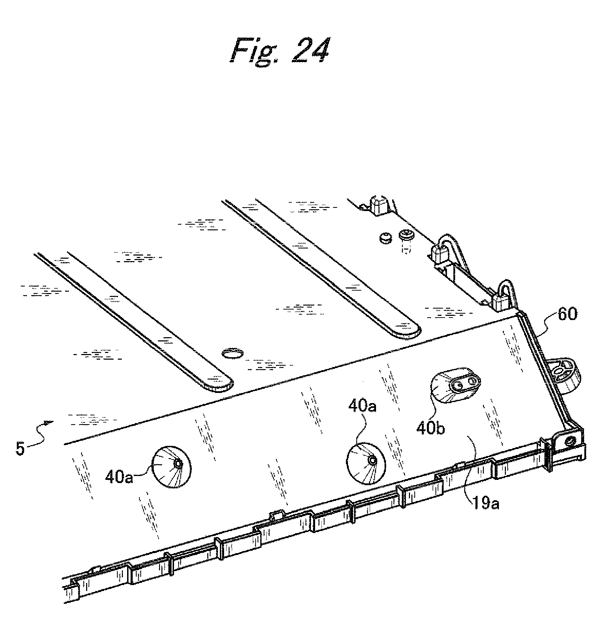

Fig.24 is a detailed view of a portion of the upper side plate 19a of the back face member 5 and the mounting portions 40a, 40a··, 40b, 40b are projected from an outer surface of the upper side plate 19a. The respective mounting portions 40a, 40a··, 40b, 40b are drawn and are not punched, and therefore, a hole is not present at a face of the mounting portion. Therefore, light of an inner portion is not leaked from the mounting portions 40a, 40a··, 40b, 40b, the mounting portions are constituted by a height equal to or higher than about 4mm, apexes of the mounting portions 40a, 40a·· are provided with screw holes and the mounting portions 40b, 40b on one side are formed with screw holes and projected portions.

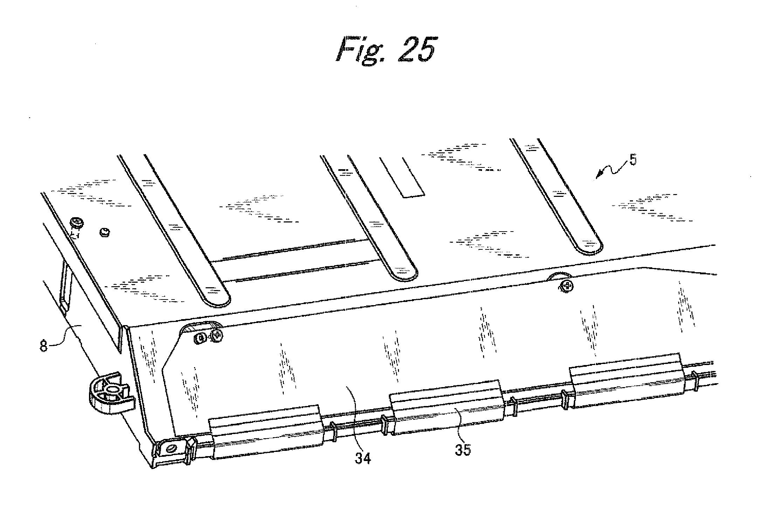

Fig.25 shows a case of attaching the drive circuit board 34 to the mounting portions 40a, 40a··, 40b, and 40b. The drive circuit board 34 is positioned by mounting on the mounting portions 40a, 40a··, 40b, 40b and fitting projected portions thereto to be fastened by screws. The drive circuit board 34 is connected to the liquid crystal cell 12 by way of the flexible printed wiring plate 35, and when the drive circuit board 34 is mounted on the mounting portions 40a, 40a··, 40b, 40b of the upper side plate 19a to be fixed thereby, the liquid crystal display panel 15 can be brought into a reversed state or an erected state. The liquid crystal cell 12 is not detached to drop from the back face member 5 by being tacked with the left and right holding members 13c, 13d.

Further, light is not cast to the flexible printed wiring plate 35 connecting the liquid crystal cell 12 and the drive circuit board 34 and an erroneous operation of the drive circuit board 34 by irradiated light can be prevented. On the other hand, although the upper side plate 19a inclined to attach the drive circuit board 34 is not necessarily needed, by attaching the drive circuit board 34 by providing the inclined upper side plate 19a and the inclined lower side plate 19b at the back face member 5, the liquid crystal display panel 15 is thinned in a depth direction, and a complication of a wire member can be resolved by enabling to shorten a length of the flexible printed wiring plate 35 connected to the drive circuit board 34.

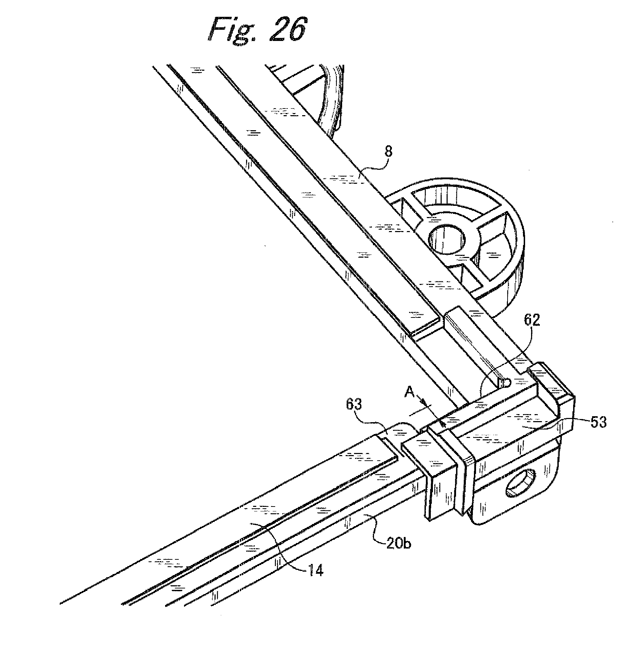

Fig.26 is a detailed view showing a lower side corner portion of the liquid crystal display panel 15. The corner portion is a portion of intersecting the side face member 8 and the edge 20b of the lower side plate 19b of the back face member 5, and the side face member mounting portion 53 provided at the side face member 8 is mounted on the mounting portion receive 54. Here, there is provided a stepped difference A between an inner side 62 of the side face member mounting portion 53 and an inner side 63 of the edge 20b. That is, the inner side 62 of the side face member mounting portion is disposed on an outer side (lower side).

Whereas the side face member 8 is made of a resin of white color to reflect light, a brightness thereof when cast with light differs from that of the back face member 5 constituted by forming the iron plate. Therefore, when the two inner sides 62, 63 are disposed on the same line without providing the stepped difference A, the corner portion of the liquid crystal display panel 15 becomes a whitish shadow to be surfaced. According to the invention, in order to prevent such a phenomenon, the stepped difference A shown by the drawing is provided between the two sides 62, 63.

## Claims

1. A liquid crystal display panel which is constituted by successively combining as main constituent parts:
a light emitting part (7);
an outer shape part constituted with a back face member (5) including a back face (18) disposed on a rear side of the light emitting part (7) by being arranged along with a reflecting member (6) on the rear side of the light emitting part (7), and upper and lower side platens (19a and 19b) inclined to be extended from an upper end and a lower end of the back face (18) to a front face side, and side face members (8) of holding both end portions of the light emitting part (7);
an optical sheet;
a liquid crystal cell (12) of displaying an image;
a middle holding member (11) of holding an upper end portion of the optical sheet along with an edge of the upper side plate (19a) of the back face member (5) on a front face side of the outer shape part;
**characterized in that:** a drive circuit board (34) for displaying the image by driving the liquid crystal cell is connected to the liquid crystal cell (12) by way of a wiring member,
the upper side plate (19a) of the back face member (5) is integrally formed with mounting portions (40a, 40b) for mounting to fix the drive circuit board (34) by drawing and hooks (37) of the middle holding member (11) are locked by groove holes provided at an edge of a side of the upper side plate (19a), and
a light blocking plate (39) for blocking light leaked from each gap of the hooks (37) and the groove holes to a rear side is formed at the middle holding member (11).

2. The liquid crystal display panel according to Claim 1, wherein the drive circuit board (34) is formed with a plurality of through holes and projected portions fitted to the through holes are formed at the mounting portions (40a, 40b).

3. The liquid crystal display panel according to Claim 1 or 2, wherein each front end portion of the inclined upper and lower side plates (19a and 19b) includes mounting portion receives (54) substantially in parallel with the back face (18), and each side face member (8) is formed with side face member mounting portions (53) mounted on the mounting portion receives (54).

4. A liquid crystal display panel which is constituted by successively combining as main constituent parts:
a light emitting part (7);
an outer shape part constituted with a back face member (5) made of iron arranged along with a reflecting member (6) on a rear side of the light emitting part (7), and side face members (8) of holding both end portions of the light emitting part (7);
an optical sheet;
liquid crystal cell (12) of displaying an image on a front face side of the outer shape part;
**characterized in that:** the back face member (5) includes a back face (18) disposed on the rear side of the light emitting part (7), and upper and lower side plates (19a and 19b) inclined to be extended from an upper end and a lower end of the back face (18) to a front face side,
each front end portion of the inclined upper and lower side plates (19a and 19b) includes mounting portion receives (54) substantially in parallel with the back face (18), and each side face member (8) is formed with side face member mounting portions (53) mounted on the mounting portion receives (54),
an edge of the lower side plate (19b) of the back face member (5) is formed substantially in a channel-like shape to insert to fit a lower end of the optical sheet, and a stepped difference (A) is formed by making an inner side (62) of each side face member mounting portion (53) disposed on a lower side of an inner side (63) of the edge (20b) of the lower side plate (19b),
a drive circuit board (34) for displaying an image by driving the liquid crystal cell is connected to the liquid crystal cell (12) by way of a wiring member (23), and
the upper side plate (19a) of the back face member (5) is integrally formed with mounting portions (40a, 40b) for mounting to fix the drive circuit board (34) by drawing.

5. The liquid crystal display panel according to any of Claims 1 to 4, wherein the side face member (8) includes an inner wall face constituting an inner face of the outer shape part and an outer wall face constituting an outer face of the outer shape part, and the outer wall face is provided with an extended portion of being extended to an outer side of the inner wall face at a vicinity of an end portion of the side face member (8).

6. The liquid crystal display panel according to any of Claims 1 to 5, wherein the light emitting part (7) is formed in substantially a slender linear shape or substantially a U-like shape, an end portion of the light emitting part (7) is attached with an elastic damping member, an interval between the inner wall face and the outer wall face of the side face member (8) is formed with an attaching portion of attaching the elastic damping member, the outer wall is formed with a recess groove capable of projecting the elastic damping member, and the end portion of the light emitting part (7) attached with the elastic damping member is movably attached to the side face member (8).

7. The liquid crystal display panel according to any of Claims 1 to 5, wherein the light emitting part (7) is constituted by substantially a slender linear shape or substantially a U-like shape, an end portion of the light emitting part (7) is attached with an elastic damping member, an interval between the inner wall face and the outer wall face of the side face member (8) is formed with an attaching portion having a width larger than a width of the elastic damping member, and the end portion of the light emitting part (7) attached with the elastic damping member is loosely fitted to be movable to the attaching portion.

8. The liquid crystal display panel according to Claim 6, wherein both ends of the back face member (5) are integrally formed with protecting pieces of covering recess grooves of the side face member (8), and when the back face member (5) and the side face member (8) are assembled, the recess grooves are closed by the protecting pieces.

9. The liquid crystal display panel according to Claim 6, 7 or 8, wherein the elastic damping member is formed with a projected piece orthogonally to a direction of attaching the slender light emitting part (7), and the projected piece is loosely fitted to a groove formed at a partitioning rib of the side face member (8).

10. The liquid crystal display panel according to any of Claims 1 to 9, wherein the light emitting part (7) is formed in substantially a slender linear shape constituting a pair of two pieces thereof, or substantially a U-like shape provided with a bent portion at one end portion thereof, the end portion of the light emitting part (7) is attached with the elastic damping member,
the side face member (8) attached by way of the elastic damping member is formed with a positioning projection with the back face member (5) between the pair of light emitting parts (7),
both sides of the positioning projection are formed with the partitioning rib of connecting the inner wall face and the outer wall face, and
a positioning hole of fitting the positioning projection is formed at the back face member (5) opposed thereto.

11. The liquid crystal display panel according to any of Claims 1 to 10, wherein a structure of overlapping the reflecting members (6) on the back face member (5) is constituted, the upper side plate of the reflecting member (6) is projected from a side end to one side, the lower side plate is projected from the side end to an opposed side, and a surface of the back plate of the back face member (5) is formed with a positioning line of a back plate of the reflecting member (6), and surfaces of the upper and lower side plates are respectively formed with positioning lines of upper and lower side plates of the reflecting member (6).
